# EUROPEAN PATENT SPECIFICATION

(11) **EP 3 218 209 B1**
(45) Date of publication and mention of the grant of the patent: **01.01.2020**
(21) Application number: 15798561.5
(22) Date of filing: 21.10.2015
(51) Int. Cl.: B60B 25/10, B60B 25/12, B62D 25/10, B62D 25/12, E05D 3/14

(54) **TRACTOR WITH OPENABLE BONNET**
TRAKTOR MIT ZU ÖFFNENDER MOTORHAUBE
TRACTEUR À CAPOT POUVANT ÊTRE OUVERT

(30) Priority: 12.11.2014 IT BG20140047
(43) Date of publication of application: 20.09.2017
(73) Proprietor: SAME DEUTZ-FAHR ITALIA S.p.A., 24047 TREVIGLIO (BG) (IT)
(72) Inventor: PLEBANI, Alessandro, I-24047 Treviglio (Bergamo) (IT); MARGUTTI, Pierangelo, I-24047 Treviglio (Bergamo) (IT)
(74) Representative: Gamba, Alessandro
(86) International application number: PCT/IB2015/058120
(87) International publication number: WO 2016/075572

(56) References cited:
- DE-A1- 19 944 436
- DE-A1- 19 946 454
- DE-A1-102005 005 416
- DE-A1-102007 015 965
- DE-B- 1 216 134
- US-A1- 2013 020 141

## Description

### Field of application

The present invention relates to a tractor comprising an openable bonnet. Specifically, the present invention relates to a tractor comprising a bonnet and bonnet movement means suitable to guide the movement thereof during opening and closing.

In the following description, the term "tractor" shall refer to both agricultural tractors, and more generally, the earth moving machines derived from agricultural tractors.

### State of the art

The typical purpose of bonnets in vehicles, and in particular in tractors, is to delimit and protect a predetermined inner area of the vehicle, at the same time allowing easy access thereto. Preferably, housed within this area, a plurality of components of the vehicle are present that typically require specific maintenance operations or the like.

For example, the bonnet of a tractor usually contains the engine, and/or at least a portion of the exhaust system of the engine, and/or at least a portion of the suction system of the engine, and/or at least a portion of the cooling system of the tractor and the like; in the light of this it is evident that such type of components require frequent servicing, for example, to replace the filters, such as the particulate reduction filter.

Within this framework therefore it is essential for the bonnet, in an open position, to permit easy access to the service area without obstructing the operator.

The solutions of the prior art provide for tractors comprising bonnets suitable to be moved in rotation, typically, around a hinge. With this solution, however, it is always present a portion of the service area near the coupling area of the bonnet, in which there is at least a portion of the bonnet that creates an obstruction to the operator. Examples of documents that disclose solution of the prior art are DE102007015965, US2013/020141, DE19944436, DE1216134.

### Presentation of the invention

The purpose of the present invention is to provide a tractor in which said drawback of the prior art is overcome, by guaranteeing an opening of the bonnet which offers ample access to the area.

Such purpose is achieved by a tractor made according to claim 1 and by the movement method according to claim 10. The dependent claims describe further preferred embodiments.

### Description of the drawings

The characteristics and advantages of the tractor according to the present invention will be evident from the description given below, by way of a non-limiting example, according to the attached drawings, wherein:

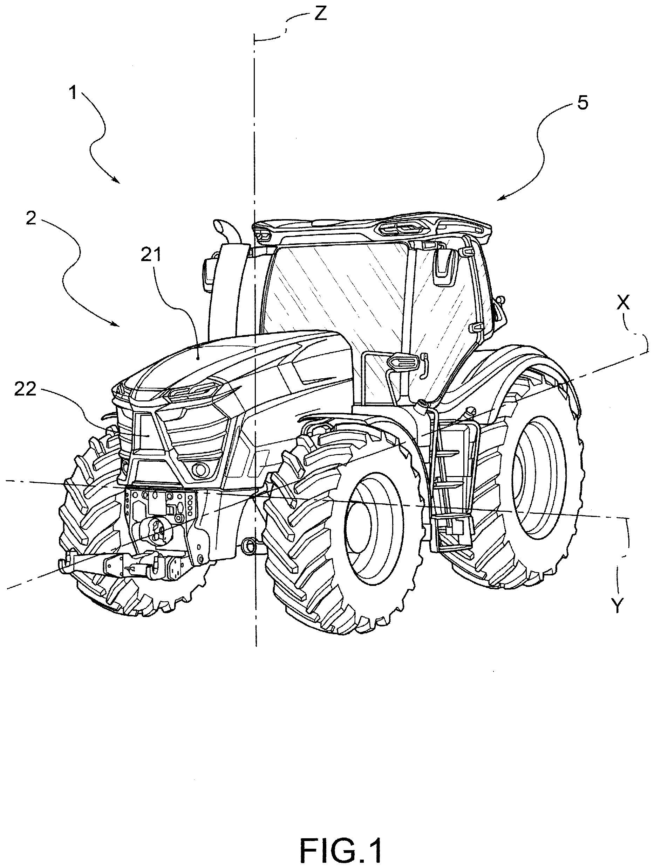

- figure 1 represents a perspective view of a tractor of the present invention, according to a preferred embodiment;
- figures 2a, 2b, 2c and 2d respectively show perspective views of the bonnet of the tractor in figure 1, in its various stages of opening, respectively, placed in a closed position, a first intermediate position, a second intermediate position, and a open position;

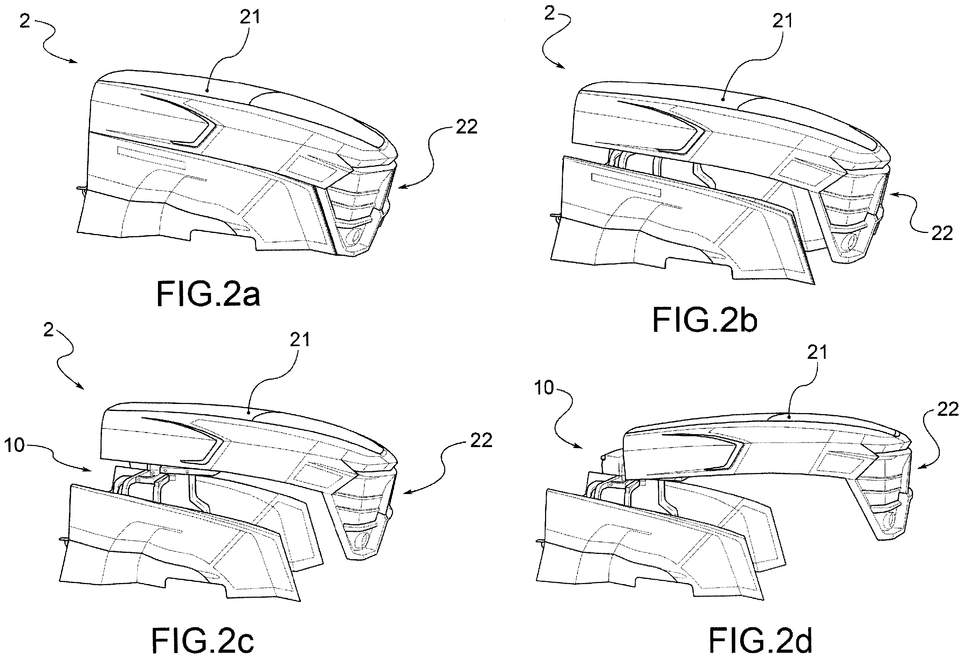

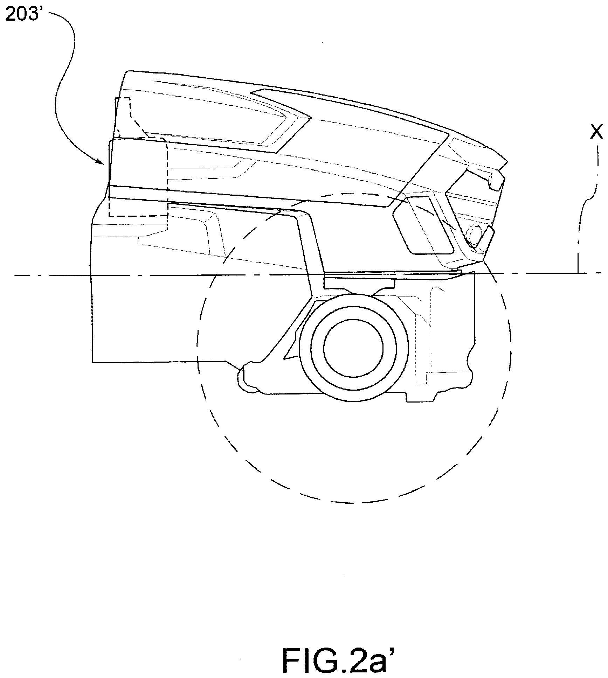

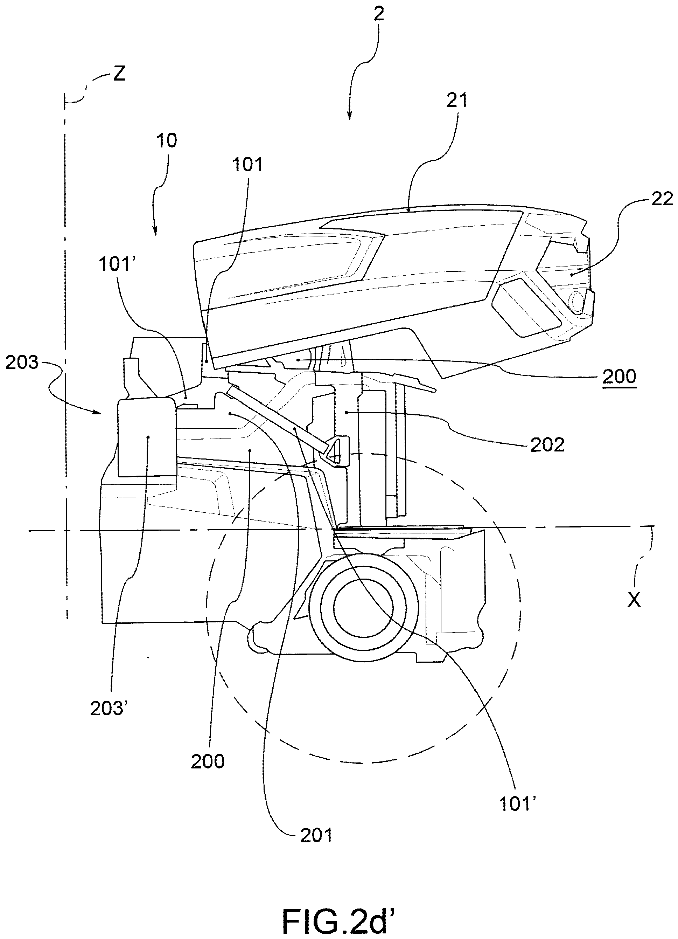

- Figures 2a' and 2d' illustrate two side views of a part of the tractor with the bonnet respectively in the closed position and the open position according to a preferred embodiment;

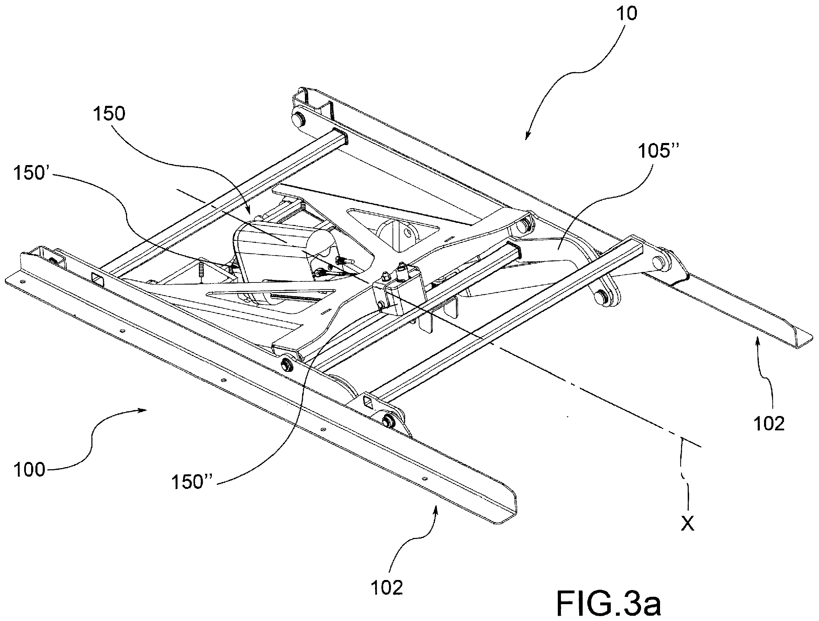

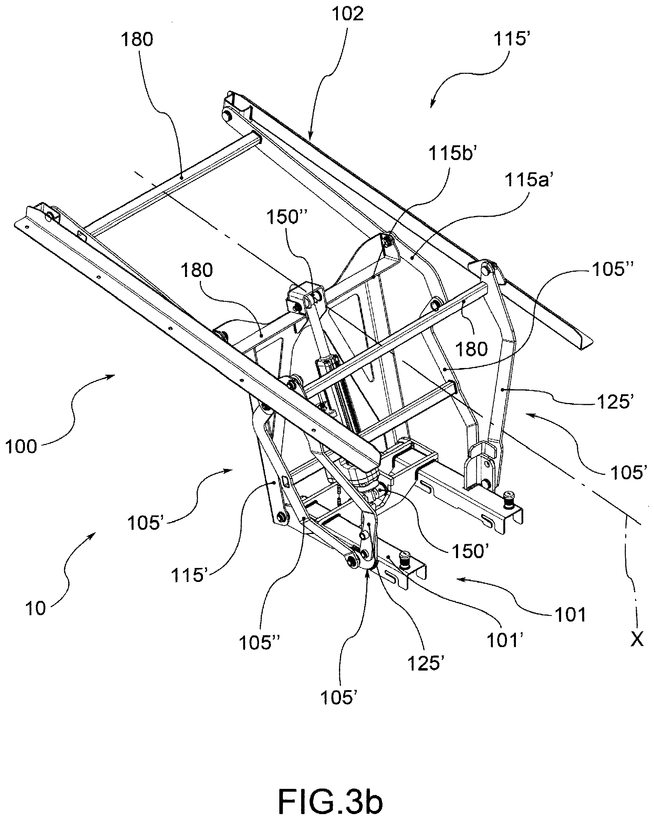

- Figures 3a and 3b represent two perspective views, respectively in a closed position and an open position of the bonnet movement means comprised in the tractor of the present invention, according to a preferred embodiment.

### Detailed description

With reference to the attached drawings, reference numeral 1 globally denotes a tractor. In a non-limiting manner the figures show a tractor 1 of the agricultural type.

The tractor 1 has a longitudinal axis X-X, along the direction of advancement of the tractor in a straight line, a transverse axis Y-Y perpendicular to the longitudinal axis X-X and parallel to the axles on which the wheels are mounted, and a vertical axis Z-Z, perpendicular to the longitudinal axis X-X and to the transverse axis Y-Y.

Moreover, the tractor 1 comprises a driving area 5 for the user, to enclose the same, preferably, composed of a seat or a closed cab.

According to this preferred embodiment, the tractor 1 comprises a bonnet 2 and bonnet movement means 10 suitable for guiding the movement of the bonnet 2.

Preferably, the bonnet 2 extends along said longitudinal axis X-X frontally to the driving area 5. Preferably, the bonnet 2 is substantially L-shaped, comprising an upper portion 21 which substantially extends in the direction of the longitudinal axis X-X and a front portion 22, on which for example the grille and headlamp are present, which extends substantially in height in the direction of the vertical axis Z-Z.

According to the preferred embodiment, the bonnet 2 is suitable to provide shelter for a service area 200 in which some components of the tractor 1 are housed requiring the performance of service operations.

Preferably, the service area 200 comprises a portion of the frame 210, the engine 201, a part of the cooling system of the tractor 202, a part of the exhaust system of the engine 203 and the like. According to a preferred embodiment, along the longitudinal axis X-X, starting from the nose of the tractor towards the driving area 5, several components of the cooling system 202, the engine 201 and, lastly, several components of the exhaust system of the engine 203 are arranged. In other words, the exhaust system of the engine 203 for example containing the exhaust of the engine, with the exhaust silencer 203' which extends substantially vertically, is in close proximity to the driving area 5; part of the exhaust system is for example the particulate removal filter, such as the DPF (Diesel Particulate Filter).

According to the preferred embodiment, the bonnet movement means 10 are suitable to guide the movement of the bonnet 2 from a closed position to an open position, and vice versa; in the closed position the bonnet is closed 2 and the tractor 1 is ready to move, in the open position the bonnet 2 is open and the service area 200 is accessible to allow the performance of maintenance operations, such as changing the DPF.

According to a preferred embodiment, the bonnet movement means 10 are suitable to guide the movement of the bonnet 2 in rotational translation.

Preferably, the bonnet movement means 10 are suitable to guide the movement of the bonnet 2 starting from a closed position thereof towards the open position, first in translation and then also in rotation.

According to a preferred embodiment, the bonnet 2 is guided in movement along the longitudinal axis X-X starting from the closed position in which it is next to the driving area 5 to the open position in which it is distal from the driving area 5. In other words, according to a preferred embodiment, the bonnet 2 during the opening operations moves away from the driving area 5. Preferably, the bonnet 2 in the open position does not create any obstruction in terms of access to the service area 200 next to the driving area 5; preferably, this permits easy filter replacement operations for the reduction of particulate matter.

According to a preferred embodiment, in the open position the bonnet 2 has its front portion 22, such as the area comprising the tractor grille, turned upward. Preferably, the bonnet 2 does not create any obstruction in terms of access to the service area 200 distal to the driving area 5; preferably, this allows easy maintenance operations, for example of the cooling system 202 and the radiators.

According to a preferred embodiment, the bonnet movement means 10 comprise an actuation element 150, for example, electrically operated, suitable to move the bonnet 2. In further embodiments, the actuation element 150 is pneumatically or hydraulically operated, or performs a movement using mechanical interactions, such as through a system of chains or a rack and pinion.

According to the preferred embodiment, the bonnet movement means 10 comprise a pantograph structure 100 suitable to guide the movement of the bonnet 2 in rotational translation.

Furthermore, the pantograph structure 100 comprises a bottom frame 101 attached to the fixed parts of the tractor 1 in the service area 200; in other words, the bottom frame 101 comprises a load-bearing structure 101' and attachment portions 101" suitable to be integrally joined to fixed components of the tractor 1, for example its load-bearing frame 210 or other fixed structures.

Preferably, the pantograph structure 100 comprises a bonnet frame 102 attached to the bonnet 2; in other words the bonnet frame 102 is integral with the bonnet 2, for example locked to it with bolts or rivets.

In the preferred embodiment, the pantograph structure 100 comprises a lever system 105 comprising a plurality of levers 105', 105" extending from the bottom frame 10 to the bonnet frame 102 to allow the reciprocal movement thereof.

According to a preferred embodiment, the lever system 105 has its ends hinged respectively to the bottom frame 101 and to the bonnet frame 102.

Preferably, the lever system 105 comprises a plurality of translation levers 105', the reciprocal movement of which causes the translation of the bonnet frame 102 in relation to the bottom frame 101.

Preferably, the lever system 105 comprises at least a first translation lever 115' and at least a second translation lever 125', preferably spaced from each other along the longitudinal axis X-X.

Moreover, the lever system 105 further comprises at least one rotation lever 105" the movement of which causes a rotation of the bonnet frame 102 in relation to the bottom frame 101. In other words the rotation lever 105" is shaped so as to impose, preferably once the bonnet 2 has reached its maximum height in translation, a rotation of said bonnet 2.

According to a preferred embodiment, the rotation lever 105" is hinged to the bottom frame 101 and acts on at least one translation lever 105', for example on the first translation lever 115'.

Preferably, depending on the specific case, the rotation lever 105" is hinged to the bottom frame 101 located between the first translation lever 115' and the second translation lever 125'. In further embodiments instead the rotation lever 105" is positioned outside the area defined by the translation levers 105'.

In further embodiments, the first translation lever 115' is composed of two elements, a first main translation lever 115a' and a second main translation lever 115b' mutually hinged at one end thereof, preferably next to the bonnet frame 2. In said embodiment, the rotation lever 105" acts on the first main translation lever 115a' and/or on the second main translation lever 115b' in order to impose the rotation of the bonnet 2.

According to a preferred embodiment, the actuation element 150 has a first end 150' operating directly on the bottom frame 101 and a second end 150" operating directly on the lever system 105 or on the bonnet frame 102. Preferably, the actuation element 150 thus presents its ends hinged to the aforesaid elements so as to be guided in movement by the movement induced by the lever system 105.

Preferably, on command, the user actuates the actuation element 150 thereby entailing the opening of the bonnet 2, and vice versa its closure.

According to a preferred embodiment, the actuation element 150 and in particular the first end 150' thereof is integral with the bottom frame 101 so as to discharge its action and the action of the weight force of the bonnet 2 and of the moving elements of the pantograph 100 on said bottom frame 101.

According to further embodiments, the bonnet movement means 10 are suitable to be guided in movement operated manually, for example in the event of mechanical failure of the actuation element 150, so that safe handling of the bonnet between the open position and closed position is always possible, and thus permit in any case easy access to the service area.

In a preferred embodiment, the actuation element 150 is disconnactable upon command; in other words, through for example an access door made on the bonnet 2, preferably on the upper portion 21 thereof, an operator accesses the service area 200, disconnect the actuation element 150 and moves the bonnet 2 into an open position manually.

According to a preferred embodiment, the pantograph structure 100 extends in width from one side to the other of the tractor bonnet 1, extending along the transverse axis Y-Y. The pantograph structure 100 is a substantially symmetrical structure in relation to the vertical centreline plane passing from the longitudinal axis X-X of the tractor 1, preferably, so that the actuation element 150 lies on said centreline plane.

Preferably, the pantograph structure 100 thus comprises one or more torsion bars 180, or similar items which placed transversely extend from one side to the other of the tractor 1 and in particular of its bonnet 2 so as to prevent the rotation of the bonnet around the longitudinal axis X-X.

It should be noted that in this description, when reference is made to terms such as levers, linkages or bars relative to some of the components of the movement means, both components with a generic elongated tubular shape, but also more complex components with more complex structures, e.g. composed of multiple structural load elements mutually joined together are meant. By way of a non-limiting example, an articulated structure of this type is shown in the attached figures 3a and 3b showing the structure comprising several translation levers 105' and several torsion bars 180, joined together by reinforcing ribs.

Depending on the requirements of the project engineer, for example depending on the dimensions of the tractor 1, of the bonnet 2 and the dimensions of its components for example in the service area 200, the sizes and positions of the mutual hinges between the various components of the linkages comprised in the bonnet movement means 10 as described above are customizable according to the functional requirements. The bonnet movement means 10 and in particular the pantograph structure 105 is in fact particularly suitable to be designed in a modular manner, so as to be suitable to be mounted on tractors with different dimensional characteristic or different component dimensions.

The present invention also relates to the method of moving a bonnet 2 of a tractor 1 using the bonnet movement means 10 of the tractor 1 substantially according to the above description. The method of movement entails moving the bonnet 2 between a closed position in which a service area 200 is enclosed and protected and an open position in which said service area 200 is accessible. Preferably, the method comprises a step of first translating the bonnet 2 and then also of rotating said bonnet 2.

Innovatively, the tractor of the present invention makes it possible to achieve the purpose of the invention, i.e. to permit opening of the bonnet such as not to cause any obstruction in terms of access to the service area, as instead occurs in the tractors of the prior art.

Advantageously, the tractor offers easy access to the service area even in the proximity of the driving area. Operations in said part of the .service area, such as replacing a particulate reduction filter or the exhaust system of the tractor, are advantageously facilitated.

Furthermore, the tractor advantageously also provides easy access to the service area near the nose of the tractor, for example in the area where the radiators are usually fitted. Advantageously, the front portion of the bonnet is raised to heights which from the ground reach and exceed even 2 metres allowing easy access of the operator to the front of the tractor.

A further advantage lies in the fact that the bonnet movement means, and in particular the actuation element, do not act directly on the bonnet, applying on it for example the opening actions, but all such actions are applied and discharged onto the components comprised in the movement means.

A further advantage lies in the fact that the effects of the movement of the bonnet, such as its weight force, are borne entirely by the movement means in particular by the pantograph structure.

Advantageously, the pantograph structure as well as allowing easy movement of the bonnet has a structure such as to support the bonnet in the open position safely. In fact, advantageously, with the bonnet open, the risk of accidental closing is minimised, as is the risk of the bonnet waving when open for example by effect of the wind.

Advantageously, moreover, such tractors are suitable to be of large dimensions, and therefore are likely to comprise bonnets in turn of large size and therefore heavy weight, even up to the order of a one hundred kilograms. The bonnet movement means are suitable to guide in movement large sized and very heavy bonnets.

In further embodiments, the arrangement of the linkages and thus the reciprocal hinge positions, the number of linkages, their shape may vary as needed, for example as a function of the position which the bonnet, in the open position, may adopt.

In yet further embodiments, even the manner in which the rotary translation of the bonnet 2 takes place are modifiable according to design needs or the characteristics of said tractor 1 or bonnet 2.

Further embodiments are also suitable to present the bonnet frame not only connected to the upper portion of the bonnet 21, as shown, but also to its front portion 22.

It is clear that a person skilled in the art may make modifications to the tractor, bonnet and bonnet movement means described above so as to satisfy contingent requirements, all contained within the scope of protection defined by the following claims.

## Claims

1. Tractor (1), having a longitudinal axis (X-X), comprising a driving area (5) for the user, and comprising:
- a bonnet (2) which extends along said longitudinal axis (X-X) frontally to the driving area (5), and suitable to provide protection for a service area (200) in which are housed some components of the tractor (1), for which service operations need to be performed, such as a portion of the chassis (210), the motor (201), a part of the cooling system of the tractor (202), a part of the exhaust system of the motor (203) and the like;
- bonnet movement means (10) suitable to guide in motion the bonnet (2) from a closed position to an open position in which the service area (200) is accessible, and vice versa;
wherein the bonnet movement means (10) comprise a pantograph structure (100) to guide in motion the bonnet (2) in rotational translation;
the tractor (1) being **characterized by** the fact that the pantograph structure (100) comprises a bottom frame (101) attached to the fixed parts of the tractor (1) present in the service area (200), a bonnet frame (102) attached to the bonnet (2), and a lever system (105) comprising a plurality of levers (105'; 105") extending from the bottom frame (101) to the bonnet frame (102) to permit reciprocal movement between them.

2. Tractor (1) according to claim 1, wherein the bonnet movement means (10) are suitable to guide in motion the bonnet (2) from a closed position thereof towards the open position first in translation and then also in rotation.

3. Tractor (1) according to any of the previous claims, wherein the bonnet (2) is guided in movement along the longitudinal axis (X-X) starting from the closed position in which it is next to the driving area (5) to the open position in which it is distal from the driving area(5).

4. Tractor (1) according to claim 3, wherein, in the open position, the bonnet (2) has a front portion (22) rotated upwards.

5. Tractor (1) according to any of the previous claims, wherein the bonnet movement means (10) comprise an actuation element (150), for example electrically operated, suitable to guide in motion the bonnet (2).

6. Tractor (1) according to any of the preceding claims, wherein the lever system (105) comprises a plurality of translation levers (105'), the relative movement of which involves the translation of the bonnet frame (102) in relation to the bottom frame (101) and at least one rotation lever (105") the movement of which involves a rotation of the bonnet frame (102) in relation to the bottom frame (101).

7. Tractor (1) according to claim 5, wherein the actuation element (150) has a first end (150') operating directly on the bottom frame (101) and a second end (150") operating directly on the system of levers (105) or on the bonnet frame (102).

8. Tractor (1) according to claim 6, wherein the actuation element (150) and in particular the first end (150') thereof is integral with the bottom frame (101) so as to discharge its action and the action of the weight force of the bonnet (2) and of the moving elements of the pantograph (100) on said bottom frame (101).

9. Tractor (1) according to any of the preceding claims, wherein the pantograph structure (100) extends in width from one side to another of the bonnet of the tractor (1) comprising one or more torsion bars (180) and having a structure substantially symmetrical to the vertical centreline plane passing through the longitudinal axis (X-X) of the tractor (1), preferably, in such a way that the actuation element (150) lies on the centreline plane.

10. Method for moving a bonnet (2) of a tractor (1) according to any of the proceeding claims, by means of the bonnet movement means (10) comprised in the tractor (1), between a closed position, in which the bonnet (2) encloses a service area (200) and an open position in which said service area (200) is accessible, wherein said method comprises the step of:
- first of all translating the bonnet (2);
- then, in addition, rotating the bonnet (2).

## Patentansprüche

1. Traktor (1), welcher eine Längsachse (X-X) aufweist, einen Fahrbereich (5) für den Benutzer umfasst, und umfasst:
- eine Haube (2), welche sich entlang der Längsachse (X-X) stirnseitig zu dem Fahrbereich (5) erstreckt und dazu geeignet ist, einen Schutz für einen Wartungsbereich (200) bereitzustellen, in welchem einige Komponenten des Traktors (1) untergebracht sind, für welche Wartungsarbeiten durchgeführt werden müssen, beispielsweise ein Abschnitt des Chassis (210), der Motor (201), ein Teil des Kühlsystems des Traktors (202), ein Teil des Abgassystems des Motors (203) und dergleichen;
- Haubenbewegungsmittel (10), welche dazu geeignet sind, die Haube (2) in einer Bewegung von einer geschlossenen Position in eine geöffnete Position zu führen, in welcher der Wartungsbereich (200) zugänglich ist, und umgekehrt;
wobei die Haubenbewegungsmittel (10) eine Pantograph-Struktur (100) umfassen, um die Haube (2) in einer Bewegung in einer rotatorischen Translation zu führen;
wobei der Traktor (1) durch die Tatsache gekennzeichnet ist, dass die Pantograph-Struktur (100) einen unteren Rahmen (101), welcher an den fixierten Teilen des Traktors (1) angebracht ist, die in dem Wartungsbereich (200) vorhanden sind, einen Haubenrahmen (102), welcher an der Haube (2) angebracht ist, und ein Hebelsystem (105) umfasst, welches eine Mehrzahl von Hebeln (105'; 105") umfasst, welche sich von dem unteren Rahmen (101) zu dem Haubenrahmen (102) erstrecken, um eine reziproke Bewegung zwischen diesen zuzulassen.

2. Traktor (1) nach Anspruch 1, wobei die Haubenbewegungsmittel (10) dazu geeignet sind, die Haube (2) in einer Bewegung von einer geschlossenen Position davon in Richtung einer geöffneten Position zunächst in einer Translation und dann auch in einer Rotation zu führen.

3. Traktor (1) nach einem der vorhergehenden Ansprüche, wobei die Haube (2) in einer Bewegung entlang der Längsachse (X-X) ausgehend von der geschlossenen Position, in welcher sie sich in der Nähe des Fahrbereichs (5) befindet, zu der geöffneten Position geführt ist, in welcher sie von dem Fahrbereich (5) entfernt ist.

4. Traktor (1) nach Anspruch 3, wobei die Haube (2) einen vorderen Abschnitt (22) aufweist, welcher in der geöffneten Position nach oben gedreht ist.

5. Traktor (1) nach einem der vorhergehenden Ansprüche, wobei die Haubenbewegungsmittel (10) ein beispielsweise elektrisch betriebenes Betätigungselement (150) umfassen, welches dazu geeignet ist, die Haube (2) in einer Bewegung zu führen.

6. Traktor (1) nach einem der vorhergehenden Ansprüche, wobei das Hebelsystem (105) eine Mehrzahl von Translationshebeln (105'), deren Relativbewegung die Translation des Haubenrahmens (102) in Bezug auf den unteren Rahmen (101) beinhaltet, und wenigstens einen Rotationshebel (105") umfasst, dessen Bewegung eine Rotation des Haubenrahmens (102) in Bezug auf den unteren Rahmen (101) beinhaltet.

7. Traktor (1) nach Anspruch 5, wobei das Betätigungselement (150) ein erstes Ende (150'), welches direkt an dem unteren Rahmen (101) wirkt, und ein zweites Ende (150") umfasst, welches direkt an dem System von Hebeln (105) oder an dem Haubenrahmen (102) wirkt.

8. Traktor (1) nach Anspruch 6, wobei das Betätigungselement (150) und insbesondere dessen erstes Ende (150') integral mit dem unteren Rahmen (101) ist, um dessen Wirkung und die Wirkung der Gewichtskraft der Haube (2) und der Bewegungs-Elemente des Pantographs (100) an den unteren Rahmen (101) abzugeben.

9. Traktor (1) nach einem der vorhergehenden Ansprüche, wobei sich die Pantograph-Struktur (100) in einer Breite von einer Seite zu einer anderen der Haube des Traktors (1) erstreckt, wobei sie einen oder mehrere Torsionsstäbe (180) umfasst und eine Struktur aufweist, welche im Wesentlichen symmetrisch zu der vertikalen Mittellinienebene ist, welche durch die Längsachse (X-X) des Traktors (1) verläuft, vorzugsweise in einer solchen Art und Weise, dass das Betätigungselement (150) in der Mittellinienebene liegt.

10. Verfahren zum Bewegen einer Haube (2) eines Traktors (1) nach einem der vorhergehenden Ansprüche, mittels der Haubenbewegungsmittel (10), die in dem Traktor (1) umfasst sind, zwischen einer geschlossenen Position, in welcher die Haube (2) einen Wartungsbereich (200) umschließt, und einer geöffneten Position, in welcher der Wartungsbereich (200) zugänglich ist, wobei das Verfahren die folgenden Schritte umfasst:
- zunächst translatorisches Bewegen der Haube (2);
- dann zusätzlich Rotieren der Haube (2).

## Revendications

1. Tracteur (1) ayant un axe longitudinal (X-X), comprenant une zone de conduite (5) pour l'utilisateur, et comprenant :
- un capot (2) qui s'étend le long dudit axe longitudinal (X-X) frontalement à la zone de conduite (5), et adapté pour fournir une protection d'une zone de service (200) dans laquelle sont logés certains composants du tracteur (1), pour lesquels des opérations de service doivent être réalisées, comme une partie du châssis (210), le moteur (201), une partie du système de refroidissement du tracteur (202), une partie du système d'échappement du moteur (203) et équivalent ;
- des moyens de déplacement du capot (10) adaptés pour guider le déplacement du capot (2) d'une position fermée à une position ouverte dans laquelle la zone de service (200) est accessible, et vice-versa ;
dans lequel les moyens de déplacement du capot (10) comprennent une structure de pantographe (100) permettant de guider le déplacement du capot (2) en translation rotationnelle ;
le tracteur (1) étant **caractérisé par le fait que** la structure de pantographe (100) comprend un cadre inférieur (101) fixé aux pièces fixes du tracteur (1) présentes dans la zone de service (200), un cadre de capot (102) fixé au capot (2), et un système de levier (105) comprenant une pluralité de leviers (105' ; 105") s'étendant du cadre inférieur (101) au cadre de capot (102) et permettant un déplacement réciproque entre ces deux éléments.

2. Tracteur (1) selon la revendication 1, dans lequel les moyens de déplacement du capot (10) sont adaptés pour guider le déplacement du capot (2) à partir d'une position fermée de celui-ci en direction de la position ouverte d'abord en translation puis également en rotation.

3. Tracteur (1) selon l'une quelconque des revendications précédentes, dans lequel le mouvement du capot (2) est guidé le long de l'axe longitudinal (X-X) en partant de la position fermée, dans laquelle il se trouve à côté de la zone de conduite (5), vers la position ouverte, dans laquelle il est distal de la zone de conduite (5).

4. Tracteur (1) selon la revendication 3, dans lequel, dans la position ouverte, le capot (2) a une partie avant (22) tournée vers le haut.

5. Tracteur (1) selon l'une des revendications précédentes, dans lequel les moyens de déplacement du capot (10) comprennent un élément d'actionnement (150), par exemple actionné électriquement, adapté pour guider le déplacement du capot (2).

6. Tracteur (1) selon l'une des revendications précédentes, dans lequel le système de levier (105) comprend une pluralité de leviers de translation (105'), dont le déplacement relatif implique la translation du cadre de capot (102) par rapport au cadre inférieur (101), et au moins un levier de rotation (105") dont le mouvement implique une rotation du cadre de capot (102) par rapport au cadre inférieur (101).

7. Tracteur (1) selon la revendication 5, dans lequel l'élément d'actionnement (150) a une première extrémité (150') agissant directement sur le cadre inférieur (101) et une seconde extrémité (150") agissant directement sur le système de leviers (105) ou sur le cadre de capot (102).

8. Tracteur (1) selon la revendication 6, dans lequel l'élément d'actionnement (150), et en particulier la première extrémité (150') de celui-ci, est formé d'un seul tenant avec le cadre inférieur (101) de manière à décharger son action et l'action du poids du capot (2) et des éléments mobiles du pantographe (100) sur ledit cadre inférieur (101).

9. Tracteur (1) selon l'une des revendications précédentes, dans lequel la structure de pantographe (100) s'étend dans sa largeur d'un côté du capot du tracteur (1) à l'autre, comprend une ou plusieurs barres de torsion (180) et a une structure sensiblement symétrique au plan de ligne médiane verticale passant à travers l'axe longitudinal (X-X) du tracteur (1), de préférence, de sorte que l'élément d'actionnement (150) repose sur le plan de ligne médiane.

10. Procédé de déplacement du capot (2) d'un tracteur (1) selon l'une des revendications précédentes, au moyen des moyens de déplacement du capot (10) compris dans le tracteur (1), entre une position fermée, dans laquelle le capot (2) renferme une zone de service (200), et une position ouverte, dans laquelle ladite zone de service (200) est accessible, dans lequel ledit procédé comprend les étapes :
- tout d'abord de translation du capot (2) ;
- puis en outre de rotation du capot (2).
